# EUROPEAN PATENT SPECIFICATION

(11) **EP 4 165 442 B1**
(45) Date of publication and mention of the grant of the patent: **24.09.2025**
(21) Application number: 21821508.5
(22) Date of filing: 02.06.2021
(51) Int. Cl.: G01V 1/28, G01V 1/30, G01V 20/00

(54) **MODELING PRESENCE AND QUALITY OF ORIGINAL ORGANIC MATERIALS IN A REGION**
MODELLIERUNG DER PRÄSENZ UND QUALITÄT VON ORIGINALEN ORGANISCHEN MATERIALIEN IN EINEM BEREICH
MODÉLISATION DE PRÉSENCE ET DE QUALITÉ DE MATÉRIAUX ORGANIQUES D'ORIGINE DANS UNE RÉGION

(30) Priority: 12.06.2020 US 202016946261
(43) Date of publication of application: 19.04.2023
(73) Proprietor: Chevron U.S.A. Inc., San Ramon, CA 94583 (US)
(72) Inventor: ZHAO, Yushi, San Ramon, California 94583-0806 (US); LIU, Jianchang, San Ramon, California 94583-0806 (US); KATZ, Barry Jay, San Ramon, California 94583-0806 (US)
(74) Representative: Haseltine Lake Kempner LLP
(86) International application number: PCT/US2021/035508
(87) International publication number: WO 2021/252244

(56) References cited:
- US-A1- 2010 175 886
- US-A1- 2010 175 886
- US-A1- 2017 167 230
- US-A1- 2017 167 230
- US-A1- 2018 267 205
- US-A1- 2018 267 205
- UTE MANN: "Analogue and Numerical Modelling of Sedimentary Systems: From Understanding to Prediction", 28 November 2008 (2008-11-28), pages 239 - 274, XP093155460, ISBN: 978-1-4443-0313-1, Retrieved from the Internet <URL:https://onlinelibrary.wiley.com/doi/pdf/10.1002/9781444303131.ch11> DOI: 10.1002/9781444303131.ch11

## Description

### FIELD

The present disclosure relates generally to the field of modeling presence and quality of original organic materials in a region. Reference may be made to Ute Mann: "Modelling Source-Rock Distribution and Quality Variations: The Organic Facies Modelling Approach" in "Analogue and Numerical Modelling of Sedimentary Systems: From Understanding to Prediction", 28 November 2008, which relates to process-based organic facies modelling, OF-Mod, software, and discusses general conceptual ideas and their translation and numerical description in the different modules of the program. The OF-Mod concept is based on the idea that 1) the source type, 2) the preservation conditions of organic matter during deposition and burial, and 3) sequence-stratigraphic aspects are the most important elements defining the organic-facies source-rock distribution and does not consider such palaeoclimate and palaeoceanographic parameters directly because they are still very difficult to constrain, particularly for ancient sediments. Reference may be made to US 2018/267205 A1 which relates to a system and method for estimating a spatial distribution of a characteristic associated with Earth resources. The method includes receiving at an interface palaeogeography data including 1) palaeotopography data, 2) palaeobathymetry data, 3) and a palaeo-earth systems model; calculating with a processor, a retrodictive model of the characteristic based on the 1) palaeotopography data, 2) the palaeobathymetry data, and 3) the palaeo-earth systems model; and imaging the spatial distribution of the characteristic over a part of the Earth. Reference may be made to US 2010/175886 A1 which relates to a method for retrodicting source-rock quality and/or paleoenvironmental conditions. A first set of system variables associated with source-rock quality is selected. A second set of system variables directly or indirectly causally related to the first set of variables is also selected. Data for variables selected to be known quantities are estimated or obtained. A network with nodes including both sets of variables is formed. The network has directional links connecting interdependent nodes. The directional links preferably honor known causality relations. A Bayesian network algorithm is used with the data to solve the network for the unknown variables and their associated uncertainties. The variables selected to be unknowns can be input nodes (paleoenvironmental conditions), intermediate nodes, output nodes (source rock quality), or any combination thereof. Reference may be made to US 2017/167230 A1 which relates to a method for exploitation of a sedimentary basin. Exploitation of the sedimentary basin is permitted by the choice of zones of interest within the basin, the zones being determined by means of maps of total organic carbon TOC and of hydrogen index HI of at least one sedimentary layer. The maps of total organic carbon TOC and of hydrogen index HI are obtained taking into account the current values of TOC*_{A}*(W) and HI*_{A}*(W) at the level of the well and taking into account the maps of bathymetry BM and of sedimentation rate SM.

### BACKGROUND

Understanding presence and quality of hydrocarbon source rocks in a region is an important component of hydrocarbon exploration and extraction. It is often complicated by geochemical data limitations, requiring their presence to be predicted. Source rock prediction is difficult due to complexity of the interactions of a number of physical, chemical, biologic factors, and geological uncertainties.

### SUMMARY

This disclosure relates to modeling presence and quality of original organic materials in a region. The present invention is defined by the appended independent claims to which reference should now be made. Specific embodiments are defined in the dependent claims.

These and other objects, features, and characteristics of the system and/or method disclosed herein, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of "a," "an," and "the" include plural referents unless the context clearly dictates otherwise.

### BRIEF DESCRIPTION OF THE DRAWINGS

FIG. 1 illustrates an example system that models presence and quality of original organic materials in a region.
FIG. 2 illustrates an example method for modeling presence and quality of original organic materials in a region.
FIG. 3 illustrates an example integrated model workflow for modeling presence and quality of original organic materials in a region.
FIGS. 4A, 4B, and 4C illustrate example basin geometry control on nutrients.
FIGS. 5A and 5B illustrate examples of organic carbon production.
FIG. 6 illustrates an example diagram of model integration for modeling presence and quality of original organic materials in a region.
FIG. 7 illustrates example relationships provided/simulated by models.
FIG. 8 illustrates an example of organic carbon delivery.

### DETAILED DESCRIPTION

The present disclosure relates to modeling presence and quality of original organic materials in a region. Basin-wide modeling is utilized to improve confidence of source rock presence and quality estimation. A 4D basin model incorporates geological model, geochemical models, and resettlement model for a region. Utilizing the 4D basin model provides consistency of internal data, geology-constrained basin-wide calculations, capability to capture local controls to allow basin-specific interpretations, reduction of reliance on empirical relationships, and capability to investigate source rock development through time. This system is highly integrable with other disciplines such as climate modeling and ocean current modeling.

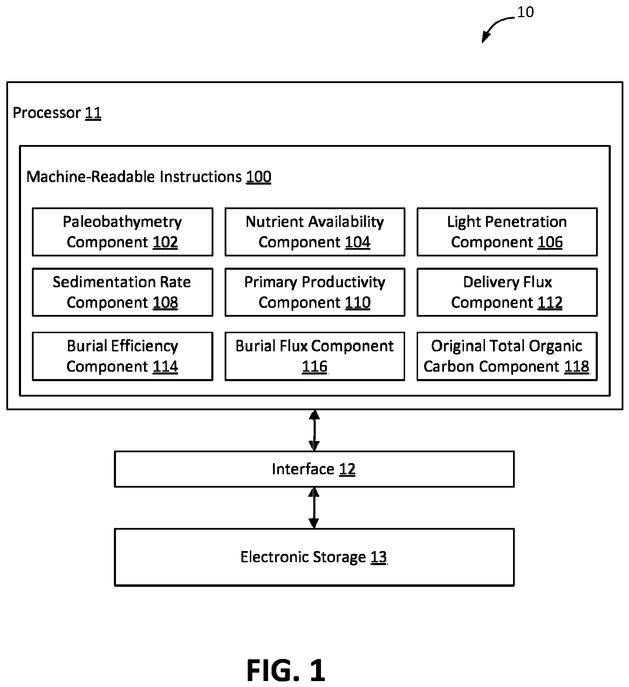

The methods and systems of the present disclosure may be implemented by and/or in a computing system, such as a system 10 shown in FIG. 1. The system 10 may include one or more of a processor 11, an interface 12 (e.g., bus, wireless interface), an electronic storage 13, and/or other components. Paleobathymetry information, nutrient availability information, light penetration information, sedimentation rate information, and/or other information for one or more time periods of interest may be obtained by the processor 11. The paleobathymetry information may characterize paleo water depth in the region. The nutrient availability information may characterize nutrient availability in the region. The light penetration information may characterize light penetration of water column in the region. The sedimentation rate information may characterize sedimentation rate in the region.

For a time step in a source rock development model, primary productivity in the region may be determined by the processor 11 based on the nutrient availability in the region, the light penetration in the region, and the paleo water depth in the region. Delivery flux in the region may be determined by the processor 11 based on the primary productivity in the region and the paleo water depth in the region. Burial efficiency in the region may be determined by the processor 11 based on the paleo water depth in the region, the sedimentation rate in the region, and the primary productivity in the region. Burial flux in the region may be determined by the processor 11 based on the delivery flux in the region and the burial efficiency in the region. Original total organic carbon in the region may be determined by the processor 11 based on the burial flux in the region and the sedimentation rate in the region.

Understanding presence and quality of hydrocarbon source rocks in a region is an important component of hydrocarbon exploration and extraction. For example, understanding presence and quality of hydrocarbon source rocks in a region may be a prerequisite for establishing petroleum generation, migration, and accumulation in the region. Prediction of source rock production in a region may include prediction of primary production (e.g., synthesis of organic compounds from atmospheric and/or aqueous carbon dioxide) in the region, prediction of organic material delivery to mineral surfaces in the region, and prediction of how the delivered organic materials are buried in the region.

However, source rock prediction is difficult due to complexity of the interactions of a number of physical, chemical, biologic factors, and geological uncertainties. For example, source rock samples may not be collected from basin locations without wells and/or location that are deeper than the depths of the wells, and source rock data may there be inadequate to reveal basin trends. Various factors, such as ocean currents, paleo-water-depths, and sediment remobilization may greatly impact the quality of source prediction in marine settings and add to complexity of source rock prediction.

Present disclosure provides an integrated model workflow for modeling presence and quality of original organic materials in a region. A region may refer to a geographic location, such as a geographic area or a geographic volume. The integrated model workflow utilizes a 4D basin model that simulates 3D spatial characteristics of a region through time. The integrated model workflow includes construction of a geological model of the region. A geological model may provide a spatial representation of distribution of sediments and rocks in the region. For example, geological modeling may be used to generate computer representation of a basin based on geophysical and/or geological observations of the basin.

After the geological model of the region is constructed, a forward source rock prediction workflow may be performed. Output of the integrated model workflow may be provided to a model (e.g., basin model) for charge simulation. The forward source rock prediction model may incorporate basin geometry control on primary productivity, water current and bathymetric control on organic material delivery, organic material resettlement process impacting organic material burial, and/or other information. The forward source rock prediction model may enable geologic source prediction in variety of depositional environments (e.g., terrestrial, lacustrine, restricted, open marine). The source rock prediction may be calibrated/validated against regional source rock data to achieve more accurate source distribution calculations.

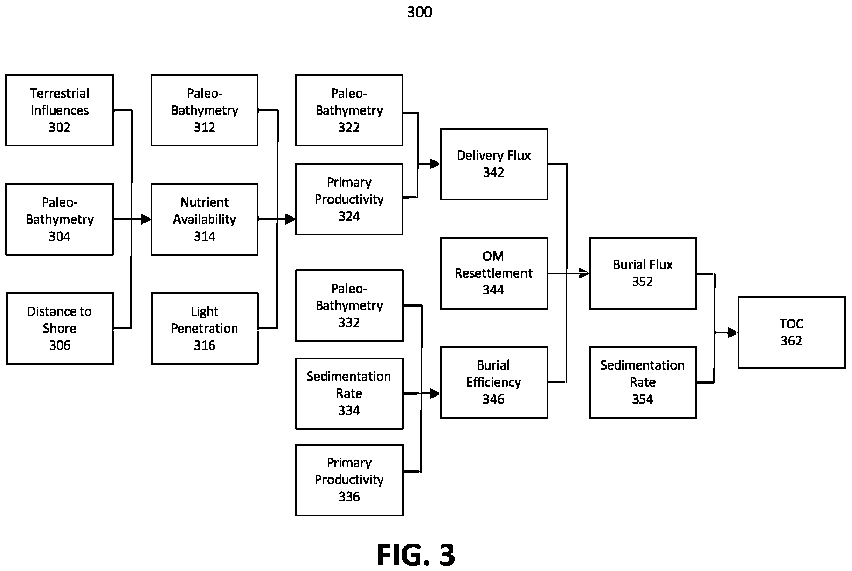

FIG. 3 illustrates an example integrated model workflow 300 for modeling presence and quality of original organic materials in a region. The process shown in the integrated model workflow 300 may be performed for different time steps in forward source rock prediction modeling. In the integrated model workflow 300, for a time step, nutrient availability 314 at different locations in the region may be determined based on terrestrial influences 302, paleobathymetry 304 (e.g., paleo water depth), and distance to shore 306 (e.g., distance to paleo-shoreline). Primary productivity 324 at different locations in the region may be determined based on paleobathymetry 312, nutrient availability 314, and light penetration 316. Delivery flux 342 at different locations in the region may be determined based on paleobathymetry 322 and primary productivity 324.

Burial efficiency 346 at different locations in the region may be determined based on paleobathymetry 332, sedimentation rate 334, and primary productivity 336. Burial flux 352 at different locations in the region may be determined based on delivery flux 342, organic material resettlement 344, and burial efficiency 346. Burial flux 352 may represent organic influx and sedimentation rate 354 may represent inorganic influx for the region at the time step. Total organic carbon 362 (e.g., original total organic carbon) at different locations in the region may be determined based on burial flux 352 and sedimentation rate 354.

The integrated model workflow 300 may be used to determine other information relating to source rock prediction. For example, the integrated model workflow 300 may be used to determine original hydrogen index, source thicknesses, and/or other information. The integrated model workflow 300 may be agnostic to basin modeling software packages.

The electronic storage 13 may be configured to include electronic storage medium that electronically stores information. The electronic storage 13 may store software algorithms, information determined by the processor 11, information received remotely, and/or other information that enables the system 10 to function properly. For example, the electronic storage 13 may store paleobathymetry information, information relating to paleo water depth in a region, nutrient availability information, information relating to nutrient availability in the region, light penetration information, information relating to light penetration of water column in the region, sedimentation rate information, information relating to sedimentation rate in the region, information relating to source rock development model, information relating to primary productivity, information relating to delivery flux, information relating to burial efficiency, information relating to burial flux, information relating to original total organic carbon, and/or other information.

The processor 11 may be configured to provide information processing capabilities in the system 10. As such, the processor 11 may comprise one or more of a digital processor, an analog processor, a digital circuit designed to process information, a central processing unit, a graphics processing unit, a microcontroller, an analog circuit designed to process information, a state machine, and/or other mechanisms for electronically processing information. The processor 11 may be configured to execute one or more machine-readable instructions 100 to facilitate modeling presence and quality of original organic materials in a region. The machine-readable instructions 100 may include one or more computer program components. The machine-readable instructions 100 may include one or more of a paleobathymetry component 102, a nutrient availability component 104, a light penetration component 106, a sedimentation rate component 108, a primary productivity component 110, a delivery flux component 112, a burial efficiency component 114, a burial flux component 116, an original total organic carbon component 118, and/or other computer program components.

The paleobathymetry component 102 may be configured to obtain paleobathymetry information and/or other information. Obtaining paleobathymetry information may include one or more of accessing, acquiring, analyzing, creating, determining, examining, generating, identifying, loading, locating, opening, receiving, retrieving, reviewing, selecting, storing, utilizing, and/or otherwise obtaining the paleobathymetry information. The paleobathymetry component 102 may obtain paleobathymetry information from one or more locations. For example, the paleobathymetry component 102 may obtain paleobathymetry information from a storage location, such as the electronic storage 13, electronic storage of a device accessible via a network, and/or other locations. The paleobathymetry component 102 may obtain paleobathymetry information from one or more hardware components (e.g., a computing device, a component of a computing device) and/or one or more software components (e.g., software running on a computing device, model running on a computing device). Paleobathymetry information may be stored within a single file or multiple files.

The paleobathymetry information may be obtained for one or more time periods of interest. A time period of interest may refer to an amount/duration of time that is relevant to production, delivery, and/or burial of organic materials (e.g., original total organic carbon) in a region. A time period of interest may include a period of time during which organic materials are produced, delivered, and/or buried in a region. The burial of the organic materials in the region may result in development of source rock in the region. A time period of interest may include a paleo (ancient) time period. The paleobathymetry information may be obtained for different moments within the time period(s) of interest.

The paleobathymetry information may characterize paleo water depth in the region. The paleobathymetry information may characterize paleo water depth at different locations in the region. Paleo water depth in the region may refer to ancient water depth in the region. Paleo water depth in the region may refer to the water depth in the region during a geological past. For example, paleo water depth in the region may include water depth at different locations in the region during the time period(s) of interest.

The paleobathymetry information may characterize paleo water depth in the region by including information that describes, delineates, identifies, is associated with, quantifies, reflects, sets forth, and/or otherwise characterizes the paleo water depth in the region. For example, the paleobathymetry information may characterize paleo water depth in the region by including information that specifies the water depth at different locations in the region during the time period(s) of interest and/or information that is used to determine the water depth at different locations in the region during the time period(s) of interest. Other types of paleobathymetry information are contemplated.

The nutrient availability component 104 may be configured to obtain nutrient availability information and/or other information. Obtaining nutrient availability information may include one or more of accessing, acquiring, analyzing, creating, determining, examining, generating, identifying, loading, locating, opening, receiving, retrieving, reviewing, selecting, storing, utilizing, and/or otherwise obtaining the nutrient availability information. The nutrient availability component 104 may obtain nutrient availability information from one or more locations. For example, the nutrient availability component 104 may obtain nutrient availability information from a storage location, such as the electronic storage 13, electronic storage of a device accessible via a network, and/or other locations. The nutrient availability component 104 may obtain nutrient availability information from one or more hardware components (e.g., a computing device, a component of a computing device) and/or one or more software components (e.g., software running on a computing device, model running on a computing device). Nutrient availability information may be stored within a single file or multiple files.

The nutrient availability information may be obtained for the time period(s) of interest. The nutrient availability information may be obtained for different moments within the time period(s) of interest. The nutrient availability information may characterize nutrient availability in the region. The nutrient availability information may characterize nutrient availability at different locations in the region. The nutrient availability information may characterize nutrient availability in the region during the time period(s) of interest. Nutrient availability may refer to type and/or amount of nutrient available in the region for production of organic materials. Nutrient availability may refer available source of nutrients for production of organic materials. For example, nutrient availability in the region may include amount and/or types of nutrients available at different locations in the region during the time period(s) of interest.

The nutrient availability information may characterize nutrient availability in the region by including information that describes, delineates, identifies, is associated with, quantifies, reflects, sets forth, and/or otherwise characterizes the nutrient availability in the region. For example, the nutrient availability information may characterize nutrient availability in the region by including information that specifies the nutrient availability at different locations in the region during the time period(s) of interest and/or information that is used to determine the nutrient availability at different locations in the region during the time period(s) of interest. Other types of nutrient availability information are contemplated.

In some implementations, the nutrient availability in the region may be determined through multiple mechanisms of supply and/or resupply. In some implementations, the nutrient availability in the region may be determined based on nutrient enrichment and/or renewal processes driven by one or more paleo-shorelines, basin geometry, and/or one or more environmental factors in the region (e.g., nutrient enrichment and renewal processes, such as upwelling), and/or other information. For example, the region may have included a basin (e.g., ancient basin) and one or more shorelines (e.g., ancient shoreline(s)) during the time period(s) of interest. The geometry of the basin and the shoreline(s) may impact the type, how much, and/or where nutrients are available in the region during the time period(s) of interest. For instance, the shape of the shoreline(s) and/or the shape of the basin (e.g., underwater terrain, paleobathymetry) may impact how nutrient is moved, is concentrated, and/or is dispersed in the region. The nutrient availability in the region may be dependent on one or more terrestrial influences that affect how nutrients moves from land to water.

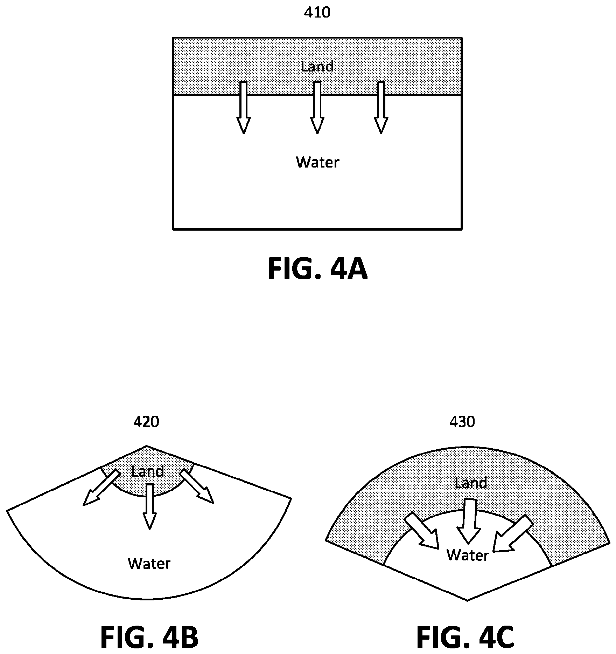

FIGS. 4A, 4B, and 4C illustrate example basin geometry control on nutrients. FIG. 4A illustrates an example top-down view of a region 410 in which a straight shoreline divides lands from water. The geographic configuration of land and water in the region 410 may cause nutrient and/or nutrient source to move from land to water such that nutrient and/or nutrient source is concentrated near the straight shoreline. FIG. 4B illustrates an example top-down view of a region 420 in which curved shoreline divides land from water. In the region 420, water may surround land. The geographic configuration of land and water in the region 420 may cause nutrient and/or nutrient source to move from land to water such that nutrient and/or nutrient source is more diluted in water than in the region 410. Nutrient and/or nutrient source may be more widely dispersed in the region 420 due to excess amount of water. Such geographic configuration of land and water may result in less nutrient and/or nutrient source being available per unit area in the region 420 than in the region 410. FIG. 4C illustrates an example top-down view of a region 430 in which curved shoreline divides land from water. In the region 430, land may surround water. The geographic configuration of land and water in the region 430 may cause nutrient and/or nutrient source to move from land to water such that nutrient and/or nutrient source is more elevated in water than in the region 410. Nutrient and/or nutrient source may be more concentrated due to convergence of nutrient inputs from land to water. Such geographic configuration of land and water may result in more nutrient and/or nutrient source being available per unit area in the region 430 than in the region 410.

The light penetration component 106 may be configured to obtain light penetration information and/or other information. Obtaining light penetration information may include one or more of accessing, acquiring, analyzing, creating, determining, examining, generating, identifying, loading, locating, opening, receiving, retrieving, reviewing, selecting, storing, utilizing, and/or otherwise obtaining the light penetration information. The light penetration component 106 may obtain light penetration information from one or more locations. For example, the light penetration component 106 may obtain light penetration information from a storage location, such as the electronic storage 13, electronic storage of a device accessible via a network, and/or other locations. The light penetration component 106 may obtain light penetration information from one or more hardware components (e.g., a computing device, a component of a computing device) and/or one or more software components (e.g., software running on a computing device, model running on a computing device). Light penetration information may be stored within a single file or multiple files.

The light penetration information may be obtained for the time period(s) of interest. The light penetration information may be obtained for different moments within the time period(s) of interest. The light penetration information may characterize light penetration of water column in the region. Water column in the region may refer to a portion (e.g., column) of water from water surface to underwater terrain below. For example, the region may include a basin during the time period(s) of interest, and light penetration information may characterize light penetration of water column at different locations in the basin during the time period(s) of interest.

The light penetration information may characterize light penetration of water column in the region during the time period(s) of interest. Light penetration may refer to amount of light (e.g., sunlight) that penetrates water column and reaches various depths. Light penetration of water column in the region may refer to how far and/or with what intensity light penetrates through water. Light penetration in water column in the region may refer to how light penetrating water is scattered and/or absorbed as light passes downwards. For example, light penetration of water column in the region may include how far and/or with what intensity light penetrates water column at different locations in the region during the time period(s) of interest. Light penetration of water column in the region may include and/or depend on light availability in the region. Light availability in the region may refer to how much light was available for penetrating into the water column in the region. Light availability in the region may be measured in terms of intensity, frequency, duration, and/or in other measurable units.

The light penetration information may characterize light penetration of water column in the region by including information that describes, delineates, identifies, is associated with, quantifies, reflects, sets forth, and/or otherwise characterizes the light penetration of water column in the region. For example, the light penetration information may characterize light penetration of water column in the region by including information that specifies the light penetration of water column at different locations in the region during the time period(s) of interest and/or information that is used to determine the light penetration of water column at different locations in the region during the time period(s) of interest. For instance, the light penetration information may establish depth of photic zone at different locations in the region during the time period(s) of interest and/or may be used to establish depth of photic zone at different locations in the region during the time period(s) of interest. The light penetration information may characterize light penetration of water column in the region by including information relating to light penetration of water column in the region, such as by including information that characterizes light availability at different locations in the region during the time period(s) of interest and/or information that is used to determine light availability at different locations in the region during the time period(s) of interest. Other types of light penetration information are contemplated.

The sedimentation rate component 108 may be configured to obtain sedimentation rate information and/or other information. Obtaining sedimentation rate information may include one or more of accessing, acquiring, analyzing, creating, determining, examining, generating, identifying, loading, locating, opening, receiving, retrieving, reviewing, selecting, storing, utilizing, and/or otherwise obtaining the sedimentation rate information. The sedimentation rate component 108 may obtain sedimentation rate information from one or more locations. For example, the sedimentation rate component 108 may obtain sedimentation rate from a storage location, such as the electronic storage 13, electronic storage of a device accessible via a network, and/or other locations. The sedimentation rate component 108 may obtain sedimentation rate information from one or more hardware components (e.g., a computing device, a component of a computing device) and/or one or more software components (e.g., software running on a computing device, model running on a computing device). Sedimentation rate information may be stored within a single file or multiple files.

The sedimentation rate information may be obtained for the time period(s) of interest. The sedimentation rate information may be obtained for different moments within the time period(s) of interest. The sedimentation rate information may characterize sedimentation rate in the region. Sedimentation rate in the region may refer to rate at which materials settles through water to the bottom (e.g., underwater terrain, sea/lake/river floor). Sedimentation rate in the region may refer to rate at which materials moving through water is deposited at the bottom. Sedimentation rate in the region may refer to rate at which inorganic materials moving through water is deposited at the bottom. The sedimentation rate in the region may be dependent on the geographic configuration of land and water in the region. For example, the sedimentation rate in the region may be determined based on erosion of materials from land/underwater terrain surface and transport of the materials in water.

The sedimentation rate information may characterize sedimentation rate in the region during the time period(s) of interest. For example, the region may include a basin during the time period(s) of interest, and sedimentation rate information may characterize sedimentation rate of material through water at different locations in the basin during the time period(s) of interest. The sedimentation rate may remain the same or change for the same location during the time period(s) of interest. In some implementations, the sedimentation rate may be an instantaneous sedimentation rate, and the sedimentation rate information instantaneous sedimentation rates the basin at different moments within the time period(s) of interest. In some implementations, the sedimentation rate may be determined by dividing the thickness of sedimentary layer deposited during a time duration by the length of the time duration.

The sedimentation rate information may characterize sedimentation rate in the region by including information that describes, delineates, identifies, is associated with, quantifies, reflects, sets forth, and/or otherwise characterizes the sedimentation rate in the region. For example, the sedimentation rate information may characterize sedimentation rate in the region by including information that specifies the sedimentation rate at different locations in the region during the time period(s) of interest and/or information that is used to determine the sedimentation rate at different locations in the region during the time period(s) of interest. Other types of sedimentation rate information are contemplated.

The primary productivity component 110 may be configured to determine, for one or more time steps in a source rock development model, primary productivity in the region. The primary productivity component 110 may be configured to determine the primary productivity for different locations in the region during the time period(s) of interest. Time steps in the source rock development model may correspond to different points and/or durations of time within the time period(s) of interest. For a time step in a source rock development model, the primary productivity in the region may be determined based on the nutrient availability in the region, the light penetration in the region (light availability and penetration of available light), the paleo water depth (water depth for the time step) in the region, and/or other information. The primary productivity at different locations in the region may be determined based on the nutrient availability at different locations in the region, the light penetration at different locations in the region (e.g., light penetration feedback/retardation), the paleo water depth at different locations in the region, and/or other information. In some implementation, the paleo water depth may be calibrated to one or more known analog systems. Primary productivity in the region at different time steps may be used to simulate primary productivity in the region (e.g., changes in primary productivity in the region) through time during the time period(s) of interest.

Primary productivity may refer to synthesis of organic compounds. Primary productivity may refer to synthesis of organic compounds from atmospheric and/or aqueous carbon dioxide. Primary productivity may occur through process of photosynthesis, chemosynthesis, and/or other processes. For example, productivity may include production of organic carbon through photosynthesis from marine autotrophs (phototrophs), which may require light and nutrients. The amount of productivity may be dependent on light penetration depths in water, sources of nutrient, and other factors. Examples of controlling nutrients may include nitrogen, phosphorus, silicon, and iron, and/or other nutrients. Primary productivity may be high where light and nutrient interact. Primary productivity may be defined as the amount of organic material produced per unit area per unit time. Primary productivity may be defined as product of phytoplankton biomass and phytoplankton growth rate.

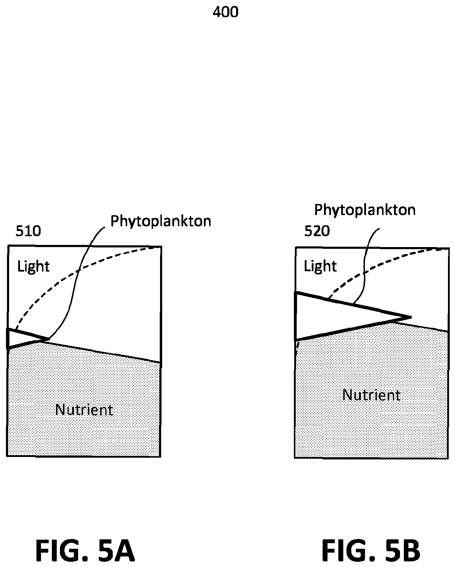

FIGS. 5A and 5B illustrate examples of organic carbon production. FIGS. 5A and 5B illustrates example scenarios 510, 520 with different amount of interaction between light penetrating water and nutrient in water. The scenarios 510, 520 may have same light penetration, but different amount of nutrient. For example, the scenario 520 may have greater amount of nutrient per volume of water than the scenario 510. Nutrient in the scenario 520 may be located closer to the surface of the water than nutrient in the scenario 510. The scenario 520 may have greater amount of interaction between light penetrating water and nutrient in water than the scenario 510, which may result in higher amount of phytoplankton in the scenario 520 than in the scenario 510.

A source rock development model may refer to a computer model (e.g., program, tool, script, function, process, algorithm) that simulates development of source rock in a region. A source rock development model may refer to a computer model that simulates development of source rock in a region through time (e.g., through time period(s) of interest). A source rock development model may incorporate relevant models that simulate different characteristics of the region. For example, a source rock development model may incorporate one or more geochemical models for the region, one or more geological models for the region, one or more resettlement models for the region, and/or other models for the region. In some implementations, the source rock development model may be calibrated using qualified regional source rock data.

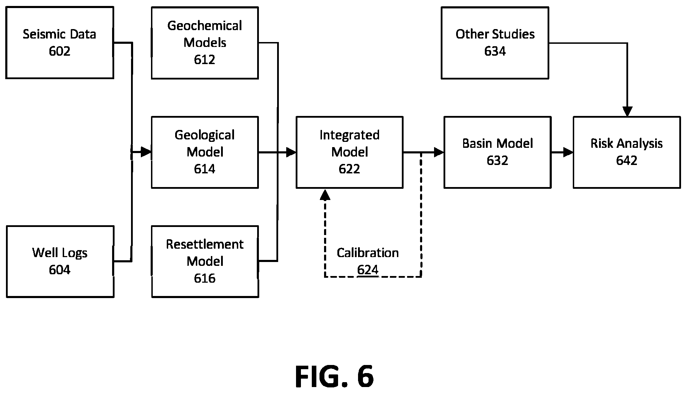

FIG. 6 illustrates an example diagram of model integration for modeling presence and quality of original organic materials in a region. As shown in FIG. 6, seismic data 602 and well logs 604 are used as input to a geological model 614 to generate a spatial representation of a region (e.g., three-dimensional computer representation of a basin). Other geophysical and/or geological observations may be used as input to the geological model to generate spatial representations of regions. The geological model 614 to generate a spatial representation of a region during the time period(s) of interest. The geological model 614 may simulates geographical changes in the region at different moments within the time period(s) of interest. That is, the geological model 614 may simulates geographical changes in the region through time. Geochemical models 612 may provide geochemical modeling for the region. Geochemical models 612 may simulate chemical reactions that affect geologic systems within the region. Geochemical models 612 may provide numerical modeling of geochemistry to facilitate understanding of fluid-mineral interactions in the region. A resettlement model 616 may simulate resettlement (e.g., movement, transport, deposition, erosion) of materials (e.g., organic materials, nutrient, mineral) within the region.

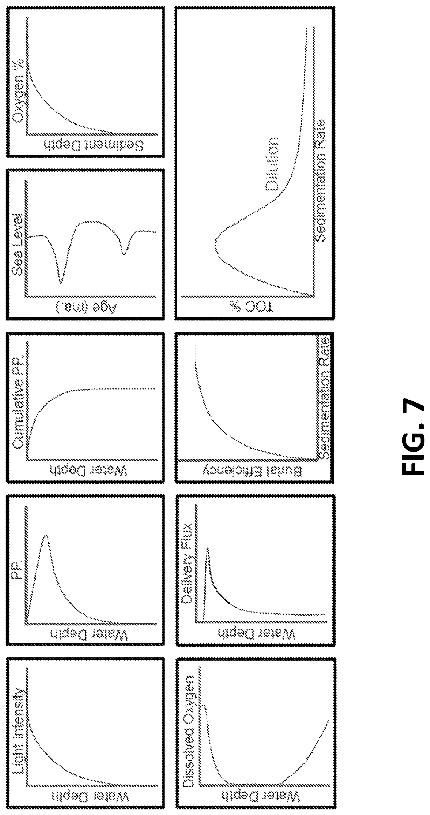

One or more of the geochemical models 612, the geological model 614, the resettlement model 616, and/or other models may provide information used to model presence and quality of original organic materials in the region. For example, the geochemical models 612 may provide information relating to nutrient availability (e.g., nutrient availability information), information relating to primary productivity, and/or other information relating to geochemical interactions in the region at different moments within the time period(s) of interest. The geological model 614 may provide information relating to water depth in the region (e.g., paleobathymetry information), information relating to sedimentation in the region (e.g., sedimentation rate information), and/or other information relating to geographical characteristics (e.g., changes in landscape/underwater terrain, movement of water, water level) in the region. The resettlement model 616 may provide information relating to resettlement of material (e.g., organic material) in the region. FIG. 7 illustrates example relationships provided/simulated by one or more of the geochemical models 612, the geological model 614, the resettlement model 616, and/or other models to model presence and quality of original organic materials in the region.

The integrated model 622 integrates the geochemical models 612, the geological model 614, and the resettlement model 616. The integrated model 622 simulates development of source rock in a region through time. The presence and quality of original organic materials in a region is modeled using the integrated model 622. One or more of the geochemical models 612, the geological model 614, the resettlement model 616, the integrated model 622, and/or other models is used to perform calculation for one or more of the paleobathymetry component 102, the nutrient availability component 104, the light penetration component 106, the sedimentation rate component 108, the primary productivity component 110, the delivery flux component 112, the burial efficiency component 114, the burial flux component 116, and/or the original total organic carbon component 118.

Calibration 624 may be performed for the integrated model 622 by comparing the output of the output of the integrated model 622 with qualified regional source rock data. The output of the integrated model 622 (e.g., original total organic carbon map, hydro-index map, source rock thickness map) may be provided to a basin model 632 to enable quantification of available hydrocarbon (e.g., from source rock) in the region. The output of the basin model 632 may be used with other studies 634 to perform risk analysis 642 of performing source rock exploration and/or extraction in the region.

A 4D basin model is constructed by incorporating a three-dimensional spatial representation of the basin that evolves through time with modeling of geochemical interactions and resettlement of material. The 4D basin model allows for basin-wide calculations with reduced reliance on empirical relationships to investigate source rock development in the basin through time. The 4D basin model enables flexibility to introduce local influences that are basin specific and incorporates concept of organic material resettlement. The 4D basin model simulates source potential of source rock developed in the basin based on production and/or preservation factors. For instance, the level of source potential of source rock in the basin may be simulated based on the level of productivity, suboxic/anoxic condition, sedimentation rate, and/or other factors that impact source rock development.

The delivery flux component 112 may be configured to determine delivery flux in the region. The delivery flux component 112 may be configured to determine delivery flux in the region for the time step(s) in the source rock development model. The delivery flux component 112 may be configured to determine delivery flux for different locations in the region during the time period(s) of interest. Delivery flux may refer to movement of organic compounds (e.g., organic carbon) across a given surface. Delivery flux may refer to rate at which organic compounds move through water across a unit area for delivery to the bottom (e.g., underwater terrain, sea/lake/river floor). Delivery flux may refer to how much organic compounds are being delivered to the bottom (e.g., gram of carbon per area per time).

For a time step in a source rock development model, the delivery flux in the region may be determined based on the primary productivity in the region, the paleo water depth (water depth for the time step) in the region, and/or other information. The delivery flux at different locations in the region may be determined based on the primary productivity at different locations in the region, the paleo water depth at different locations in the region, and/or other information. Delivery flux in the region at different time steps may be used to simulate delivery flux in the region (e.g., changes in delivery flux in the region) through time during the time period(s) of interest.

In some implementations, the delivery flux in the region may be determined further based on depositional factors in the region (e.g., depositional setting, open vs restricted marine, paleoclimate) and/or other information. For example, in a closed or restricted system, such as a lake, oxygen minimum zone may reach all the way to the bottom sediment, while in an open system, the depth and thickness of the oxygen minimum zone may vary with primary productivity and deep sea current. The depth of oxygen minimum zone may impact how organic compounds are delivered to the bottom, and may impact the delivery flux. Climate in the region during the time period(s) of interest may impact the delivery flux.

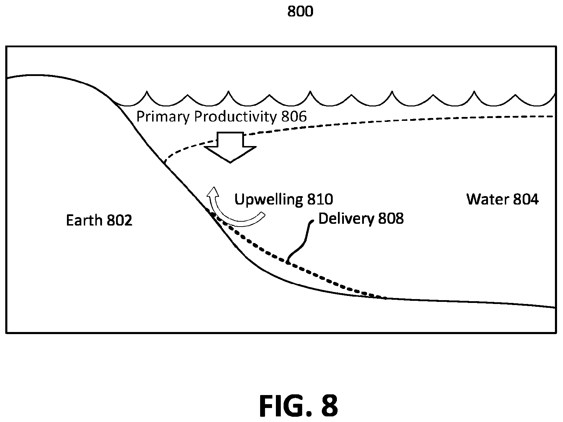

FIG. 8 illustrates an example of organic carbon delivery. FIG. 8 may have a portion of a region with earth 802 and water 804. Primary productivity 806 may occur near the surface of the water 804 based on interaction of light and nutrients (e.g., photosynthesis in top layer of the water 804) to produce organic carbon for delivery to the bottom of the water 804. Other mechanism may contribute to delivery of organic carbon to the bottom. For example, organic carbon may be delivered to the region via one or more terrestrial influences. For instance, plant debris and/or other organic matter/nutrient may be transported from land above the water 804 to the water near the shoreline, and contribute to delivery of organic carbon to the bottom.

The water 804 may be divided into different layers. For example, an oxic photic layer may exist at/near the topic. Photosynthesis may occur in the oxic photic layer to generate organic carbon. Oxygen minimum zone may be located below the oxic photic layer (and above oxic bottom layer at the bottom of the water 804). Oxygen minimum zone may include deeper water column with balance between settling rate of the organic carbon and density of the water column, resulting in oxidization of the material in the oxygen minimum zone, reduction of oxygen in the water, which leads to elevated productivity. Delivery 808 may include delivery of organic carbon to bottom of the water 804 for burial. Delivery 808 may be affected by movement of water, such as underwater currents. For example, underwater currents may cause upwelling 810 of water that carries organic carbon from the bottom towards to the top of the water 804. Lateral water current may carry organic carbon to different parts of the underwater terrain and impact distribution of the delivery 808 across the bottom of the water 804.

The burial efficiency component 114 may be configured to determine burial efficiency in the region. The burial efficiency component 114 may be configured to determine burial efficiency in the region for the time steps(s) in the source rock development model. The burial efficiency component 114 may be configured to determine burial efficiency for different locations in the region during the time period(s) of interest. Burial efficiency may refer to quality and/or degree to which organic compounds delivered to bottom of water (e.g., underwater terrain) is buried at the bottom. Burial efficiency may refer to ratio/percentage of organic compounds that are buried at the bottom after delivery. For example, referring to FIG. 8, the burial efficiency may include quantification of how much of the organic carbon in the delivery 808 is actually burred at the bottom of the water 804.

For a time step in a source rock development model, the burial efficiency may be determined based on the paleo water depth (water depth for the time step) in in the region, the sedimentation rate in the region, the primary productivity in the region, and/or other information. The burial efficiency at different locations in the region may be determined based on the paleo water depth at different locations in the region, on the primary productivity at different locations in the region, and the sedimentation rate at different locations in the region. A non-linear relationship may exist between the burial efficiency and the rate at which sediment accumulates at the bottom of water. Burial efficiency in the region at different time steps may be used to simulate burial efficiency in the region (e.g., changes in burial efficiency in the region) through time during the time period(s) of interest.

The burial flux component 116 may be configured to determine burial flux in the region. The burial flux component 116 may be configured to determine burial flux in the region for the time steps(s) in the source rock development model. The burial flux component 116 may be configured to determine burial flux for different locations in the region during the time period(s) of interest. Burial flux may refer to burial of organic compounds (e.g., organic carbon) across a given surface. Burial flux may refer to rate at which organic compounds (delivered to bottom of water) are buried (e.g., preserved in rock) across a unit area (e.g., at top of underwater terrain, sea/lake/river floor). Burial flux may refer to how much organic compounds is buried at the bottom of the water (e.g., gram of carbon per area per time).

For a time step in a source rock development model, the burial flux in the region may be determined based on the delivery flux in the region, the burial efficiency in the region, and/or other information. The burial flux at different locations in the region may be determined based on the delivery flux at different locations in the region, the burial efficiency at different locations in the region, and/or other information. In some implementations, the burial flux in the region may be determined as a product of the delivery flux in the region and the burial efficiency in the region. For example, the delivery flux in the region may be characterized by/stored in a delivery flux map and the burial efficiency in the region may be characterized by/stored in a burial efficiency map. A burial flux map for the region may be generated by multiplying the delivery flux map by the burial efficiency map. The burial flux map may characterize/store the burial flux at different locations in the region. The burial flux map may characterize/store the burial flux at different locations in the region using different pixels values (e.g., color, intensity). Burial flux in the region at different time steps may be used to simulate burial flux in the region (e.g., changes in burial flux in the region) through time during the time period(s) of interest.

In some implementations, the burial flux in the region may be determined further based on organic material resettlement in the region. Organic material resettlement may refer to movement of organic materials in the water. Organic material resettlement may be applied to capture the impact of water movement (e.g., current), sediment resettlement, and/or other factors that impact burial of organic compounds at the bottom of water. For example, the organic material resettlement in the region may be determined based on paleo-ocean current (ocean current for the time step), biological activity (impacting amount and movement of organic material in the water), depositional environment in the region (e.g., open vs restricted marine), and/or other information. For instance, a lake environment may include limited amount of organic compound movement in water (e.g., limited amount of migration of source origination and final deposition) to take into account when determining burial flux. A marine environment may have more complex organic compound movement in water (e.g., water current effects on where organic compound is eventually delivered) to take into account when determining burial flux. Organic material resettlement may be controlled by gravity driven factors, convection driven factors, and/or other factors. Gravity driven factors may include surface active sediment, buried sediment slab, and/or other factors. Convection drive factors may include turbidity current, ocean current, longshore current, tidal current, and/or other factors.

Such integration of different influences on modeling presence and quality of original organic materials in a region may allow for organic material delivery and burial modeling based on the geometry of the region. Different geographic configuration of land and water in the region may have impact how organic materials are produced, delivered, and buried in the region to produce source rock in the region. For example, referring to FIG. 4C, higher productivity may be simulated in the water with increased nutrient richness. If the underwater area has the same water depth, then portions near the shoreline may have low delivery flux while portions in which nutrient delivery coverages may have high delivery flux. If the underwater area has different water depths, then portions with shallower water may have higher delivery flux than portions with deeper water (less organic material reach sediment surface active layer with water depth increase). Applying organic material resettlement to the model may result in redistribution of the organic material delivery due to gravity driven factors, convection driven factors, and/or other factors.

The original total organic carbon component 118 may be configured to determine original total organic carbon in the region. The original total organic carbon component 118 may be configured to determine original total organic carbon in the region for the time step(s) in the source rock development model. The original total organic carbon component 118 may be configured to determine original total organic carbon for different locations in the region during the time period(s) of interest. Original total organic carbon may refer to total amount of organic carbon that is buried (e.g., preserved in rock) at a time step in the source rock development model. Original total organic carbon may refer to total amount of organic carbon that were buried (e.g., preserved in rock) at a moment in the time period(s) of interest. Original total organic carbon in the region at different time steps may be used to simulate original total organic carbon in the region (e.g., changes in original total organic carbon in the region) through time during the time period(s) of interest. Original total organic carbon in the region at different time steps may be used to simulate development of source rock development in the region through time during the time period(s) of interest. In some implementations, the original total organic carbon in the region may be provided to one or more basin models for charge simulation. Charge simulation may include simulation of source rock generation/evaluation in a basin. The original total organic carbon determined for a region may be provided as input to the basin model(s) to simulate changes in source rock through time in a basin.

For a time step in a source rock development model, the original total organic carbon in the region may be determined based on the burial flux in the region, the sedimentation rate in the region, and/or other information. The original total organic carbon at different locations in the region may be determined based on the burial flux (final organic carbon burial flux) at different locations in the region, the sedimentation rate at different locations in the region, and/or other information. How much organic carbon is buried for preservation in rock may be dependent on the rate at which organic compounds (delivered to bottom of water) are buried and the rate at which in inorganic materials are being deposited to bury the organic carbon.

In some implementations, the original total organic carbon in the region may be determined as a fraction of the burial flux in the region and the sedimentation rate in the region. For example, the burial flux in the region may be characterized by/stored in a burial flux map and the sedimentation rate in the region may be characterized by/stored in a sedimentation rate map. An original total organic carbon map for the region may be generated by dividing the burial flux map by the sedimentation rate map. The original total organic carbon map may characterize/store the original total organic carbon at different locations in the region. The original total organic carbon map may characterize/store the original total organic carbon at different locations in the region using different pixels values (e.g., color, intensity).

In some implementations, quality of source rock in the region may be determined based on the original total organic carbon in the region, original hydrogen index in the region, and thickness of source rock in the region. The original total organic carbon in at different locations in the region may be used to predict the amount and/or quality of source rock at different locations in the region. Source rock may refer to rocks from which hydrocarbons have been generated and/or are capable of being generated. Quality of source rock may refer to level of source potential of the rock. Quality of source rock may indicate capability of generating hydrocarbon from the source rock. Original hydrogen index may refer to density of hydrogen relative to density of water at a time step in the source rock development model. Original hydrogen index may refer to density of hydrogen relative to density of water at a moment in the time period(s) of interest. In some implementations, the original hydrogen index in the region may be determined based on depositional environment in the region, the paleo water depth in the region, terrestrial dilution in the region, the sedimentation rate in the region, and/or other information.

In some implementations, a relative proportion of allochthonous organic material and autochthonous organic material in the region may be determined based on delivery of organic material external of a basin, the primary productivity in the region, the burial efficiency in the region, and/or other information. Allochthonous organic material in a region may refer to organic material (e.g., organic matter, nutrients) that has been imported into the region. Autochthonous organic material in a region may refer to organic matter that is native to the region (e.g., originating in the region). The relative proportion of allochthonous organic material and autochthonous organic material at different locations in the region may be determined based on how much and/or where organic materials are delivered to the basin from outside the basin, the primary productivity at different lotions in the region, the burial efficiency at different locations in the region, and/or other information.

While the workflow of the disclosure has been described with respect to determining original total organic carbon in a region, the same/similar workflow may be used to investigate other characteristics relating to production, delivery, preservation, and/or modification of organic compounds in a region. For example, the same/similar workflow may be used to simulate original hydrogen index in a region, source thickness in a region, and/or other characteristics in a region through time.

Implementations of the disclosure may be made in hardware, firmware, software, or any suitable combination thereof. Aspects of the disclosure may be implemented as instructions stored on a machine-readable medium, which may be read and executed by one or more processors. A machine-readable medium may include any mechanism for storing or transmitting information in a form readable by a machine (e.g., a computing device). For example, a tangible computer-readable storage medium may include read-only memory, random access memory, magnetic disk storage media, optical storage media, flash memory devices, and others, and a machine-readable transmission media may include forms of propagated signals, such as carrier waves, infrared signals, digital signals, and others. Firmware, software, routines, or instructions may be described herein in terms of specific exemplary aspects and implementations of the disclosure, and performing certain actions.

In some implementations, some or all of the functionalities attributed herein to the system 10 may be provided by external resources not included in the system 10. External resources may include hosts/sources of information, computing, and/or processing and/or other providers of information, computing, and/or processing outside of the system 10.

Although the processor 11 and the electronic storage 13 are shown to be connected to the interface 12 in FIG. 1, any communication medium may be used to facilitate interaction between any components of the system 10. One or more components of the system 10 may communicate with each other through hard-wired communication, wireless communication, or both. For example, one or more components of the system 10 may communicate with each other through a network. For example, the processor 11 may wirelessly communicate with the electronic storage 13. By way of non-limiting example, wireless communication may include one or more of radio communication, Bluetooth communication, Wi-Fi communication, cellular communication, infrared communication, or other wireless communication. Other types of communications are contemplated by the present disclosure.

Although the processor 11 is shown in FIG. 1 as a single entity, this is for illustrative purposes only. In some implementations, the processor 11 may comprise a plurality of processing units. These processing units may be physically located within the same device, or the processor 11 may represent processing functionality of a plurality of devices operating in coordination. The processor 11 may be separate from and/or be part of one or more components of the system 10. The processor 11 may be configured to execute one or more components by software; hardware; firmware; some combination of software, hardware, and/or firmware; and/or other mechanisms for configuring processing capabilities on the processor 11.

It should be appreciated that although computer program components are illustrated in FIG. 1 as being co-located within a single processing unit, one or more of computer program components may be located remotely from the other computer program components. While computer program components are described as performing or being configured to perform operations, computer program components may comprise instructions which may program processor 11 and/or system 10 to perform the operation.

While computer program components are described herein as being implemented via processor 11 through machine-readable instructions 100, this is merely for ease of reference and is not meant to be limiting. In some implementations, one or more functions of computer program components described herein may be implemented via hardware (*e.g*., dedicated chip, field-programmable gate array) rather than software. One or more functions of computer program components described herein may be software-implemented, hardware-implemented, or software and hardware-implemented

The description of the functionality provided by the different computer program components described herein is for illustrative purposes, and is not intended to be limiting, as any of computer program components may provide more or less functionality than is described. For example, one or more of computer program components may be eliminated, and some or all of its functionality may be provided by other computer program components. As another example, processor 11 may be configured to execute one or more additional computer program components that may perform some or all of the functionality attributed to one or more of computer program components described herein.

The electronic storage media of the electronic storage 13 may be provided integrally (*i.e.,* substantially non-removable) with one or more components of the system 10 and/or as removable storage that is connectable to one or more components of the system 10 via, for example, a port (*e.g.,* a USB port, a Firewire port, *etc.*) or a drive (*e.g.,* a disk drive, *etc.*)*.* The electronic storage 13 may include one or more of optically readable storage media (*e.g*., optical disks, *etc.*)*,* magnetically readable storage media (*e.g.,* magnetic tape, magnetic hard drive, floppy drive, *etc.*)*,* electrical charge-based storage media (*e.g.,* EPROM, EEPROM, RAM, *etc.*)*,* solid-state storage media (*e.g.,* flash drive, *etc.*)*,* and/or other electronically readable storage media. The electronic storage 13 may be a separate component within the system 10, or the electronic storage 13 may be provided integrally with one or more other components of the system 10 (*e.g.,* the processor 11). Although the electronic storage 13 is shown in FIG. 1 as a single entity, this is for illustrative purposes only. In some implementations, the electronic storage 13 may comprise a plurality of storage units. These storage units may be physically located within the same device, or the electronic storage 13 may represent storage functionality of a plurality of devices operating in coordination.

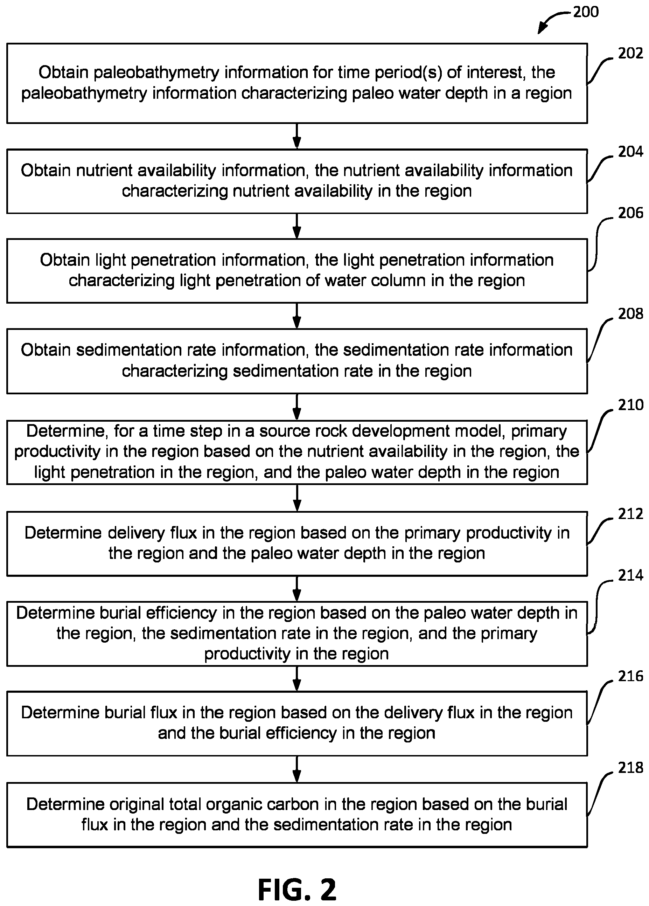

FIG. 2 illustrates method 200 for modeling presence and quality of original organic materials in a region. The operations of method 200 presented below are intended to be illustrative. In some implementations, method 200 may be accomplished with one or more additional operations not described, and/or without one or more of the operations discussed. In some implementations, two or more of the operations may occur substantially simultaneously.

In some implementations, method 200 may be implemented in one or more processing devices (*e.g.,* a digital processor, an analog processor, a digital circuit designed to process information, a central processing unit, a graphics processing unit, a microcontroller, an analog circuit designed to process information, a state machine, and/or other mechanisms for electronically processing information). The one or more processing devices may include one or more devices executing some or all of the operations of method 200 in response to instructions stored electronically on one or more electronic storage media. The one or more processing devices may include one or more devices configured through hardware, firmware, and/or software to be specifically designed for execution of one or more of the operations of method 200.

Referring to FIG. 2 and method 200, at operation 202, paleobathymetry information for one or more time periods of interest is obtained. The paleobathymetry information characterizes paleo water depth in a region. In some implementation, operation 202 may be performed by a processor component the same as or similar to the paleobathymetry component 102 (Shown in FIG. 1 and described herein).

At operation 204, nutrient availability information is obtained. The nutrient availability information characterizes nutrient availability in the region. In some implementation, operation 204 may be performed by a processor component the same as or similar to the nutrient availability component 104 (Shown in FIG. 1 and described herein).

At operation 206, light penetration information is obtained. The light penetration information characterizes light penetration of water column in the region. In some implementation, operation 206 may be performed by a processor component the same as or similar to the light penetration component 106 (Shown in FIG. 1 and described herein).

At operation 208, sedimentation rate information is obtained. The sedimentation rate information characterizes sedimentation rate in the region. In some implementation, operation 208 may be performed by a processor component the same as or similar to the sedimentation rate component 108 (Shown in FIG. 1 and described herein).

At operation 210, for a time step in a source rock development model, primary productivity in the region is determined based on the nutrient availability in the region, the light penetration in the region, and the paleo water depth in the region. In some implementation, operation 210 may be performed by a processor component the same as or similar to the primary productivity component 110 (Shown in FIG. 1 and described herein).

At operation 212, delivery flux in the region is determined based on the primary productivity in the region and the paleo water depth in the region. In some implementation, operation 202 may be performed by a processor component the same as or similar to the delivery flux component 112 (Shown in FIG. 1 and described herein).

At operation 214, burial efficiency in the region is determined based on the paleo water depth in the region, the sedimentation rate in the region, and the primary productivity in the region. In some implementation, operation 204 may be performed by a processor component the same as or similar to the burial efficiency component 114 (Shown in FIG. 1 and described herein).

At operation 216, burial flux in the region is determined based on the delivery flux in the region and the burial efficiency in the region. In some implementation, operation 206 may be performed by a processor component the same as or similar to the burial flux component 116 (Shown in FIG. 1 and described herein).

At operation 218, original total organic carbon in the region is determined based on the burial flux in the region and the sedimentation rate in the region. In some implementation, operation 208 may be performed by a processor component the same as or similar to the original total organic carbon component 118 (Shown in FIG. 1 and described herein).

It should be noted and understood that there can be improvements and modifications made of the present invention described in detail above without departing from the scope of the invention as set forth in the accompanying claims.

## Claims

1. A computer-implemented method (200) for modeling presence and quality of original organic materials in a basin to perform risk analysis (642) of performing source rock exploration and/or extraction in the basin, the method comprising:
obtaining a geochemical model for the basin, a geological model for the basin, and a resettlement model for the basin, wherein seismic data and well logs from the basin are used as input to the geological model to generate a spatial representation of the basin that simulates geographical changes in the basin through time; and
incorporating the geochemical model, the geological model, and the resettlement model to generate a source rock development model for the basin, the source rock development model simulating development of source rock in the basin through time;
wherein incorporating the geochemical model, the geological model, and the resettlement model to generate the source rock development model includes:
i) based on at least one or more of the geochemical model, the geological model, and the resettlement model:
obtaining (202) paleobathymetry information for a time period of interest, the paleobathymetry information characterizing paleo water depth in the basin;
obtaining (204) nutrient availability information, the nutrient availability information characterizing nutrient availability in the basin;
obtaining (206) light penetration information, the light penetration information characterizing light penetration of water column in the basin; and
obtaining (208) sedimentation rate information, the sedimentation rate information characterizing sedimentation rate in the basin;
ii) determining (210), for a time step in the source rock development model, primary productivity in the basin based on the nutrient availability in the basin, the light penetration in the basin, and the paleo water depth in the basin;
iii) determining (212) delivery flux in the basin based on the primary productivity in the basin and the paleo water depth in the basin;
iv) determining (214) burial efficiency in the basin based on the paleo water depth in the basin, the sedimentation rate in the basin, and the primary productivity in the basin;
v) determining (216) burial flux in the basin based on the delivery flux in the basin and the burial efficiency in the basin; and
vi) determining (218) original total organic carbon in the basin based on the burial flux in the basin and the sedimentation rate in the basin.

2. The method (200) of claim 1, wherein the nutrient availability in the basin is determined based on nutrient enrichment and renewal processes driven by a paleo-shoreline, basin geometry, and environmental factors in the basin.

3. The method (200) of claim 1, wherein the delivery flux in the basin is determined further based on depositional factors including depositional setting and paleoclimate in the basin.

4. The method (200) of claim 1, wherein the burial flux in the basin is determined as a product of the delivery flux in the basin and the burial efficiency in the basin.

5. The method (200) of claim 4, wherein the burial flux in the basin is determined further based on organic material resettlement in the basin.

6. The method (200) of claim 5, wherein the organic material resettlement in the basin is determined based on paleo-ocean current, biological activity, and depositional environment in the basin.

7. The method (200) of claim 1, wherein the original total organic carbon in the basin is determined as a fraction of the burial flux in the basin and the sedimentation rate in the basin.

8. The method (200) of claim 1, wherein quality of source rock in the basin is determined based on the original total organic carbon in the basin, original hydrogen index in the basin, and thickness of source rock in the basin.

9. The method (200) of claim 8, wherein the original hydrogen index in the basin is determined based on depositional environment in the basin, the paleo water depth in the basin, terrestrial dilution in the basin, and the sedimentation rate in the basin.

10. The method (200) of claim 9, wherein a relative proportion of allochthonous organic material and autochthonous organic material in the basin is determined based on delivery of organic material external of a basin, the primary productivity in the basin, and the burial efficiency in the basin.

11. The method (200) of claim 1, wherein the original total organic carbon in the basin is provided to a basin model for charge simulation.

12. The method (200) of claim 1, wherein:
the source rock development model is calibrated using qualified regional source rock data; or
the sedimentation rate is an instantaneous sedimentation rate.

13. A system (10) for modeling presence and quality of original organic materials in a basin, the system (10) comprising one or more physical processors (11) configured by machine-readable instructions (100) to carry out the method of any of the preceding claims.

14. One or more computer programs comprising instructions which, when executed by a computer, cause the computer to carry out the method of any of claims 1 to 12.

15. A non-transitory computer-readable storage medium having the one or more computer programs of claim 14 stored thereon.

## Patentansprüche

1. Computerimplementiertes Verfahren (200) zum Modellieren des Vorhandenseins und der Qualität ursprünglicher organischer Materialien in einem Becken, um eine Risikoanalyse (642) hinsichtlich der Durchführung von Erkundung und/oder Gewinnung von Muttergestein in dem Becken durchzuführen, wobei das Verfahren Folgendes umfasst:
Erhalten eines geochemischen Modells für das Becken, eines geologischen Modells für das Becken und eines Neuansiedlungsmodells für das Becken, wobei seismische Daten und Bohrlochprotokolle aus dem Becken als Eingabe in das geologische Modell verwendet werden, um eine räumliche Darstellung des Beckens zu erzeugen, die geografische Veränderungen in dem Becken im Laufe der Zeit simuliert; und
Integrieren des geochemischen Modells, des geologischen Modells und des Neuansiedlungsmodells zum Erzeugen eines Muttergesteinsentwicklungsmodells für das Becken, wobei das Muttergesteinsentwicklungsmodell die Entwicklung von Muttergestein in dem Becken im Laufe der Zeit simuliert;
wobei das Integrieren des geochemischen Modells, des geologischen Modells und des Neuansiedlungsmodells zum Erzeugen des Muttergesteinsentwicklungsmodells Folgendes beinhaltet:
i) basierend auf mindestens einem von dem geochemischen Modell, dem geologischen Modell und dem Neuansiedlungsmodell:
Erhalten (202) von Paläobathymetrieinformationen für einen Zeitraum von Interesse, wobei die Paläobathymetrieinformationen die Paläowassertiefe in dem Becken charakterisieren;
Erhalten (204) von Nährstoffverfügbarkeitsinformationen, wobei die Nährstoffverfügbarkeitsinformationen die Nährstoffverfügbarkeit in dem Becken charakterisieren;
Erhalten (206) von Lichtdurchdringungsinformationen, wobei die Lichtdurchdringungsinformationen eine Lichtdurchdringung einer Wassersäule in dem Becken charakterisieren; und
Erhalten (208) von Sedimentationsrateninformationen, wobei die Sedimentationsrateninformationen die Sedimentationsrate in dem Becken charakterisieren;
ii) Bestimmen (210) der Primärproduktivität in dem Becken für einen Zeitschritt im Muttergesteinsentwicklungsmodell basierend auf der Nährstoffverfügbarkeit in dem Becken, der Lichtdurchdringung in dem Becken und der Paläowassertiefe in dem Becken;
iii) Bestimmen (212) des Förderflusses in dem Becken basierend auf Primärproduktivität in dem Becken und der Paläowassertiefe in dem Becken;
iv) Bestimmen (214) der Vergrabungseffizienz in dem Becken basierend auf der Paläowassertiefe in dem Becken, der Sedimentationsrate in dem Becken und der Primärproduktivität in dem Becken;
v) Bestimmen (216) des Vergrabungsflusses in dem Becken basierend auf dem Förderfluss in dem Becken und der Vergrabungseffizienz in dem Becken; und
vi) Bestimmen (218) des ursprünglichen gesamten organischen Kohlenstoffs in dem Becken basierend auf dem Vergrabungsfluss in dem Becken und der Sedimentationsrate in dem Becken.

2. Verfahren (200) nach Anspruch 1, wobei die Nährstoffverfügbarkeit in dem Becken basierend auf Prozessen der Anreicherung und Erneuerung von Nährstoffen bestimmt wird, die durch eine Paleoküstenlinie, eine Beckengeometrie und Umweltfaktoren in dem Becken beeinflusst werden.

3. Verfahren (200) nach Anspruch 1, wobei der Förderfluss in dem Becken ferner basierend auf Ablagerungsfaktoren bestimmt wird, darunter Ablagerungsumgebung und Paläoklima in dem Becken.

4. Verfahren (200) nach Anspruch 1, wobei der Vergrabungsfluss in dem Becken als ein Produkt des Förderflusses in dem Becken und der Vergrabungseffizienz in dem Becken bestimmt wird.

5. Verfahren (200) nach Anspruch 4, wobei der Vergrabungsfluss in dem Becken ferner basierend auf einer Neuansiedlung organischen Materials in dem Becken bestimmt wird.

6. Verfahren (200) nach Anspruch 5, wobei die Neuansiedlung des organischen Materials in dem Becken basierend auf dem Paläoozeanstrom, der biologischen Aktivität und der Ablagerungsumgebung in dem Becken bestimmt wird.

7. Verfahren (200) nach Anspruch 1, wobei der ursprüngliche gesamte organische Kohlenstoff in dem Becken als ein Bruchteil des Vergrabungsflusses in dem Becken und der Sedimentationsrate in dem Becken bestimmt wird.

8. Verfahren (200) nach Anspruch 1, wobei die Qualität des Muttergesteins in dem Becken basierend auf dem ursprünglichen gesamten organischen Kohlenstoff in dem Becken, dem ursprünglichen Wasserstoffindex in dem Becken und der Dicke des Muttergesteins in dem Becken bestimmt wird.

9. Verfahren (200) nach Anspruch 8, wobei der ursprüngliche Wasserstoffindex in dem Becken basierend auf der Ablagerungsumgebung in dem Becken, der Paläowassertiefe in dem Becken, der terrestrischen Verdünnung in dem Becken und der Sedimentationsrate in dem Becken bestimmt wird.

10. Verfahren (200) nach Anspruch 9, wobei ein relativer Anteil allochthonen organischen Materials und autochthonen organischen Materials in dem Becken basierend auf der Abgabe von organischem Material außerhalb eines Beckens, der Primärproduktivität in dem Becken und der Vergrabungseffizienz in dem Becken bestimmt wird.

11. Verfahren (200) nach Anspruch 1, wobei der ursprüngliche gesamte organische Kohlenstoff in dem Becken einem Beckenmodell zur Ladungssimulation bereitgestellt wird.

12. Verfahren (200) nach Anspruch 1, wobei:
das Muttergesteinsentwicklungsmodell unter Verwendung qualifizierter regionaler Muttergesteinsdaten kalibriert wird; oder
die Sedimentationsrate eine momentane Sedimentationsrate ist.

13. System (10) zum Modellieren des Vorhandenseins und der Qualität ursprünglicher organischer Materialien in einem Becken, wobei das System (10) einen oder mehrere physische Prozessoren (11) umfasst, die durch maschinenlesbare Anweisungen (100) dazu konfiguriert sind, das Verfahren nach einem der vorhergehenden Ansprüche durchzuführen.

14. Ein oder mehrere Computerprogramme, umfassend Anweisungen, die bei Ausführung durch einen Computer den Computer zum Durchführen des Verfahrens nach einem der Ansprüche 1 bis 12 veranlassen.

15. Nichtflüchtiges computerlesbares Speichermedium, das das eine oder die mehreren Computerprogramme nach Anspruch 14 darauf gespeichert aufweist.

## Revendications

1. Procédé mis en œuvre par ordinateur (200) pour modéliser la présence et la qualité de matières organiques d'origine dans un bassin afin d'effectuer une analyse de risque (642) de l'exploration et/ou de l'extraction de la roche mère dans le bassin, le procédé comprenant les étapes suivantes :
obtenir un modèle géochimique pour le bassin, un modèle géologique pour le bassin et un modèle de réinstallation pour le bassin, où des données sismiques et des diagraphies provenant du bassin sont utilisées comme données d'entrée pour le modèle géologique afin de générer une représentation spatiale du bassin qui simule les changements géographiques dans le bassin au fil du temps ; et
intégrer le modèle géochimique, le modèle géologique et le modèle de réinstallation pour générer un modèle de développement de la roche mère pour le bassin, le modèle de développement de la roche mère simulant le développement de la roche mère dans le bassin au fil du temps ;
où l'intégration du modèle géochimique, du modèle géologique et du modèle de réinstallation pour générer le modèle de développement de la roche mère comprend les étapes suivantes :
i) sur la base d'au moins un ou plusieurs du modèle géochimique, du modèle géologique et du modèle de réinstallation :
obtenir (202) des informations paléobathymétriques pour une période de temps d'intérêt, les informations paléobathymétriques caractérisant la profondeur paléohydrique dans le bassin ;
obtenir (204) des informations sur la disponibilité des nutriments, les informations sur la disponibilité des nutriments caractérisant la disponibilité des nutriments dans le bassin ;
obtenir (206) des informations sur la pénétration de la lumière, les informations sur la pénétration de la lumière caractérisant la pénétration de la lumière dans la colonne d'eau du bassin ; et
obtenir (208) des informations sur la vitesse de sédimentation, les informations sur la vitesse de sédimentation caractérisant la vitesse de sédimentation dans le bassin ;
ii) déterminer (210), pour un intervalle de temps dans le modèle de développement de la roche mère, la productivité primaire dans le bassin sur la base de la disponibilité des nutriments dans le bassin, de la pénétration de la lumière dans le bassin et de la profondeur paléohydrique dans le bassin ;
iii) déterminer (212) le flux d'apport dans le bassin sur la base de la productivité primaire dans le bassin et de la profondeur paléohydrique dans le bassin ;
iv) déterminer (214) l'efficacité d'enfouissement dans le bassin sur la base de la profondeur paléohydrique dans le bassin, de la vitesse de sédimentation dans le bassin et de la productivité primaire dans le bassin ;
v) déterminer (216) le flux d'enfouissement dans le bassin sur la base du flux d'apport dans le bassin et de l'efficacité d'enfouissement dans le bassin ; et
vi) déterminer (218) le carbone organique total d'origine dans le bassin sur la base du flux d'enfouissement dans le bassin et de la vitesse de sédimentation dans le bassin.

2. Procédé (200) selon la revendication 1, dans lequel la disponibilité des nutriments dans le bassin est déterminée sur la base des processus d'enrichissement et de renouvellement des nutriments induits par un paléolittoral, la géométrie du bassin et des facteurs environnementaux dans le bassin.

3. Procédé (200) selon la revendication 1, dans lequel le flux d'apport dans le bassin est déterminé en outre sur la base de facteurs de dépôt, notamment le cadre sédimentaire et le paléoclimat dans le bassin.

4. Procédé (200) selon la revendication 1, dans lequel le flux d'enfouissement dans le bassin est déterminé comme étant le produit du flux d'apport dans le bassin et de l'efficacité d'enfouissement dans le bassin.

5. Procédé (200) selon la revendication 4, dans lequel le flux d'enfouissement dans le bassin est déterminé en outre sur la base de la réinstallation de la matière organique dans le bassin.

6. Procédé (200) selon la revendication 5, dans lequel le réinstallation de la matière organique dans le bassin est déterminée sur la base du courant paléo-océanique, de l'activité biologique et de l'environnement de dépôt dans le bassin.

7. Procédé (200) selon la revendication 1, dans lequel le carbone organique total d'origine dans le bassin est déterminé comme une fraction du flux d'enfouissement dans le bassin et de la vitesse de sédimentation dans le bassin.

8. Procédé (200) selon la revendication 1, dans lequel la qualité de la roche mère dans le bassin est déterminée sur la base du carbone organique total d'origine dans le bassin, de l'indice d'hydrogène d'origine dans le bassin et de l'épaisseur de la roche mère dans le bassin.

9. Procédé (200) selon la revendication 8, dans lequel l'indice d'hydrogène d'origine dans le bassin est déterminé sur la base de l'environnement de dépôt dans le bassin, de la profondeur paléohydrique dans le bassin, de la dilution terrestre dans le bassin et de la vitesse de sédimentation dans le bassin.

10. Procédé (200) selon la revendication 9, dans lequel une proportion relative de matière organique allochtone et de matière organique autochtone dans le bassin est déterminée sur la base de l'apport de matière organique extérieur au bassin, de la productivité primaire dans le bassin et de l'efficacité d'enfouissement dans le bassin.

11. Procédé (200) selon la revendication 1, dans lequel le carbone organique total d'origine dans le bassin est fourni à un modèle de bassin pour une simulation de charge.

12. Procédé (200) selon la revendication 1, dans lequel :
le modèle de développement de la roche mère est calibré à l'aide de données régionales qualifiées sur la roche mère ; ou
la vitesse de sédimentation est une vitesse de sédimentation instantanée.

13. Système (10) pour modéliser la présence et la qualité de matières organiques d'origine dans un bassin, le système (10) comprenant un ou plusieurs processeurs physiques (11) configurés par des instructions lisibles par machine (100) pour mettre en œuvre le procédé selon l'une quelque des revendications précédentes.

14. Un ou plusieurs programmes informatiques comprenant des instructions qui, lorsqu'elles sont exécutées par un ordinateur, amènent l'ordinateur à mettre en œuvre le procédé selon l'une quelconque des revendications 1 à 12.

15. Support de stockage non transitoire lisible par ordinateur sur lequel sont stockés les un ou plusieurs programmes informatiques selon la revendication 14.
